Europäisches Patentamt

European Patent Office

Office européen des brevets

(11) Veröffentlichungsnummer: **0 617 554 A1**

## EUROPÄISCHE PATENTANMELDUNG

(21) Anmeldenummer: **94104350.7**

(22) Anmeldetag: **19.03.94**

(51) Int. Cl.5: **H04N 5/262**, G06F 15/62

(30) Priorität: **24.03.93 DE 4309471**

(43) Veröffentlichungstag der Anmeldung:
**28.09.94 Patentblatt 94/39**

(84) Benannte Vertragsstaaten:
**AT BE CH DE ES FR GB LI NL PT SE**

(71) Anmelder: **MIRO COMPUTER PRODUCTS AG**
**Carl-Miele-Strasse 4**
**D-38112 Braunschweig (DE)**

(72) Erfinder: **Bunger, Owe**
**Am Walde 10**

**D-38533 Vordorf (DE)**
Erfinder: **Fischbach, Dirk**
**Siedlerstrasse 20**
**D-38124 Braunschweig (DE)**
Erfinder: **Möller, Gerhard**
**Goslarsche Strasse 28**
**D-38118 Braunschweig (DE)**

(74) Vertreter: **Lins, Edgar, Dipl.-Phys. Dr.jur.**
**Patentanwälte Gramm + Lins**
**Theodor-Heuss-Strasse 1**
**D-38122 Braunschweig (DE)**

(54) **Verfahren zur vergrösserten Wiedergabe von Videobildern.**

(57) Die zur Verarbeitung mit üblichen Rechenkapazitäten in Form von digitalisierten Bilddaten einer reduzierten Bildfläche einer Wiedergabeeinrichtung abgespeicherten Videobilder lassen sich mit den üblichen Rechen- und Speicherkapazitäten in auf einer vergrößerten, vorzugsweise auf der vollen Bildfläche der Wiedergabeeinrichtung mit einer verbesserten Videoauflösung wiedergeben, wenn jeweils zwischen zwei vorhandenen benachbarten digitalisierten Pixeldaten (A, B, C, D, E, F) wenigstens ein Pixelwert (X) eingefügt wird, der zwischen den Werten der benachbarten digitalisierten Pixeldaten liegt.

Fig. 3

EP 0 617 554 A1

Die Erfindung betrifft ein Verfahren zur Wiedergabe von Videobildern, die in Form von digitalisierten Bilddaten einer reduzierten Bildfläche einer Wiedergabeeinrichtung abgespeichert sind, auf einer gegenüber der reduzierten Bildfläche vergrößerten Bildfläche der Wiedergabeeinrichtung, bei dem zwischen zwei vorhandenen benachbarten digitalisierten Pixeldaten wenigstens ein Pixelwert eingefügt wird, der sich aus einer bilinearen Interpolation in Zeilen- und Spaltenrichtung ergibt.

Durch die immer preiswerter vorhandene Rechenkapazität von Computern sind ständig neue Anwendungen für Computer erschlossen worden. Im Grafikbereich hat der Bediener über den Computer die Möglichkeit, Zugriff auf diverse Medien zu nehmen. Hierzu gehören akustische und optische Medien, wie z.B. Tonaufzeichnungen und Fotomaterial. Die digitale Aufnahme und Wiedergabe von Sprache und Musik ist ebenso problemlos, wie das Scannen von Texten, Bildern und Fotos, die dabei bearbeitet und neu zusammengestellt werden können.

Das Digitalisieren und Bearbeiten von Videosignalen in Echtzeit hingegen ist mit der Speicher- und Rechenkapazität üblicher Computer im PC-Bereich nicht möglich. Dieser Bereich ist daher bisher dem professionellen bzw. semiprofessionellen Anwender vorbehalten.

Das Hauptproblem bei der Verarbeitung von digitalen Videosignalen ist die enorme Datenmenge, die über den Systembus eines Computers übertragen und in digitaler Form abgespeichert werden muß. Bei der Digitalisierung eines Fernsehsignals mit 25 Bildern pro Sekunde, einer Auflösung von 768 x 576 Punkten und einer Farbtiefe von 16 Bit entsteht beispielsweise eine Datenrate von > 20 MByte pro Sekunde. Eine Reduktion dieser Datenmenge ist nur durch spezielle Kompressionsverfahren oder durch eine Bildverkleinerung möglich.

Für die Durchführung der speziellen Kompressionsverfahren bei voller Videoauflösung sind nur wenige, aufwendige Spezialschaltkreise bekannt. Verbreiteter ist die Digitalisierung der analogen Bilddaten in verkleinerten Bildauflösungen. Geläufige Größen sind vor allem 1/16, 1/9 oder 1/2 der Originalfläche unter Beibehaltung des Seitenverhältnisses (nach bisheriger Norm 4:3).

Bildgrößen bis maximal 1/9 der vollen Videoauflösung lassen sich heute auf mittlere Sicht durch Softwarekomprimierung sinnvoll auf einer gängigen Festplatte digital speichern. Die Softwarekomprimierung ist bei derzeitigen Rechenleistungen äußerst preisgünstig und reduziert die Datenmenge auf Speicherkapazitäten, die derzeitige Festplatten oder andere Speichermedien bewältigen. Ebenso kann durch Softwaredekompression die Datenmenge in Echtzeit wieder als digitaler Film abgespielt werden. Es ist jedoch nicht möglich und auch nicht absehbar, daß durch weiter gesteigerte Rechenleistungen ein Videovollformat softwaremäßig in Echtzeit wiedergegeben werden kann.

Demzufolge ist es heute mit normalem Aufwand nicht möglich, eine Wiedergabe mit den Auflösungen der heutigen Videonormen oder gar künftigen Normen durchzuführen.

Mit konventioneller Rechnergrafik-Hardware ist es häufig möglich, einfache Zoom-Funktionen zur Wiedergabe des mit niedrigerer Auflösung abgespeicherten Bildes vorzunehmen. Oft läßt sich ein digitales Videobild um den Faktor 2 in horizontaler und vertikaler Richtung vergrößern, manchmal auch um den Faktor 4. Dabei wird ausschließlich eine reine Bildpunktvervielfachung mit binären Potenzfaktoren durchgeführt, so daß die geringere Auflösung für die kleine Bildfläche auf die vergrößerte Bildfläche unverändert übertragen wird, wodurch sich subjektiv ein verschlechterter Bildeindruck ergibt. Eine Variation der Vergrößerungsfaktoren ist aufgrund der Beschränkung auf binäre Potenzfaktoren nicht möglich.

Aus der Monografie Peter Haberäcker "Digitale Bildverarbeitung", München Wien 1985, Seite 170 bis 173, insbesondere Seite 172 ist es bekannt, zur Vergrößerung eines Original-Bildes Grauwerte als gewichteter Mittelwert vier benachbarter Bildpunkte in Form einer bilinearen Interpolation zu ermitteln. Dabei können Grauwerte für Pixel erzeugt werden, die im Original-Bild nicht auftreten. Daraus resultiert, daß alle Pixelwerte neu ermittelt werden, wofür eine umfangreiche Berechnung erforderlich ist. Diese Berechnung wird den Einsatz eines Mikrocomputers erfordern, der für die Berechnung der Grauwerte eine vergleichsweise lange Rechenzeit benötigt. Eine echtzeitfähige Vergrößerung wird auf diese Weise nicht möglich sein.

Die vorliegende Erfindung geht somit von der Problemstellung aus, die Wiedergabemöglichkeiten von reduzierten Bilddaten auf einer vergrößerten Bildfläche mit einfachen Mitteln zu verbessern und echtzeitfähig zu gestalten.

Zur Lösung dieses Problems ist das erfindungsgemäße Verfahren der eingangs erwähnten Art dadurch gekennzeichnet, daß zur Durchführung der Interpolationsberechnungen Hardwareschaltungen verwendet werden, in die über jeweils zwei Pixelwerte und eine Koeffizientenwahl für die Interpolation eingebbar sind, und daß für jede Zeile zunächst eine vertikale Interpolation mit den vorhandenen abgespeicherten Pixelwerten und anschließend mit den so erhaltenen vertikal interpolierten Pixelwerten eine horizontale Interpolation vorgenommen wird oder dadurch gekennzeichnet, daß zur Durchführung der Interpolationsberechnungen Hardwareschaltungen verwendet werden, in die über jeweils zwei Pixelwerte und eine Koeffizientenwahl für die Interpolation eingebbar sind, und daß für jede Spalte zunächst eine horizontale Interpolation mit den vorhandenen abgespeicherten Pixelwerten und anschließend mit den so erhaltenen horizontal interpolierten Pixelwerten eine vertikale Interpolation vorgenommen wird.

Erfindungsgemäß wird die Wiedergabe der Bilddaten der reduzierten Bildfläche mit einer verbesserten Videoauflösung dadurch vorgenommen, daß jeweils zwischen zwei Pixeldaten, die somit erhalten bleiben, eine Interpolation vorgenommen und wenigstens ein interpolierter Pixelwert eingefügt wird. Der interpolierte Pixelwert entspricht naturgemäß nicht unbedingt dem realen Pixelwert, der sich bei einer Bildaufnahme mit der vollen Auflösung für die vergrößerte Fläche ergeben würde, der interpolierte Pixelwert ist jedoch diesem Wert regelmäßig gut angenähert, so daß die Videoauflösung bei der Vergrößerung tatsächlich verbessert wird. Das erfindungsgemäße Verfahren läßt sich mit einfachen Mitteln in einer Hardwareausführung in Echtzeit ausführen. Es ermöglicht daher die verbesserte Videoanwendung auch von Computern im PC-Bereich, die bisher auf die Videoauflösung für die reduzierte Bildfläche beschränkt war.

Durch das erfindungsgemäße sequenzielle Einlesen der vorhandenen Bilddaten in festgelegter Reihenfolge unter Verwendung einer Berechnung aus je zwei Pixeldaten gelingt eine wenig aufwendige und preiswerte Realisierung des Verfahrens.

Durch das erfindungsgemäße Verfahren erfolgt die Interpolation von einer Bildecke ausgehend durch Einlesen der vorhandenen Pixeldaten zeilenweise, wobei zu jedem Zeilenpixel das in Einleserichtung benachbarte Spaltenpixel eingelesen und einer Interpolationsberechnung zu einem ersten vertikalen Interpolationsergebnis unterzogen wird, bevor das nächste Zeilenpixel eingelesen und mit dem in Einleserichtung benachbarten Spaltenpixel derselben Interpolationsberechnung zu einem zweiten vertikalen Interpolationsergebnis unterzogen wird und wobei die vertikalen Interpolationsergebnisse einer horizontalen Interpolationsberechnung zur Bildung des wiederzugebenden Videosignals unterworfen werden.

Alternativ kann naturgemäß die Interpolation von der Bildecke ausgehend auch durch spaltenweises Einlesen der vorhandenen Pixeldaten unter Bildung horizontaler Interpolationsergebnisse und Verwendung dieser Interpolationsergebnisse zu einer vertikalen Interpolationsberechnung erfolgen.

Die Erfindung wird im folgenden anhand von in der Zeichnung dargestellten Ausführungsbeispielen näher erläutert. Es zeigen:

Figur 1 -　　eine prinzipielle Darstellung des erfindungsgemäßen Verfahrens für drei Zoomfaktoren.

Figur 2 -　　ein Blockschaltbild zur Veranschaulichung des Schaltprinzips zur Durchführung des Verfahrens

Figur 3 -　　ein Blockschaltbild für die Interpolations-Hardware zur Durchführung des Verfahrens

Figur 4 -　　eine Tabelle, wie sie mit Hilfe der Interpolations-Hardware gemäß Figur 3 für den Zoomfaktor 2 erstellt wird.

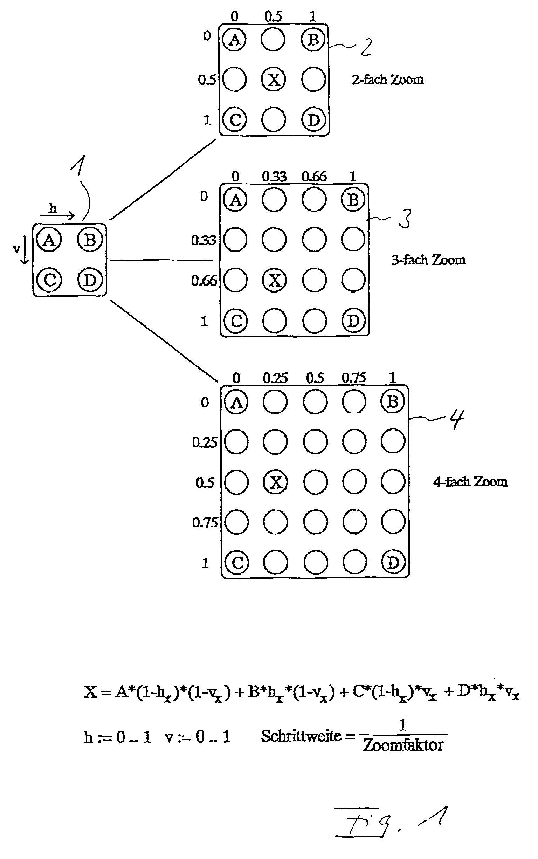

Figur 1 veranschaulicht die erfindungsgemäße Vergrößerung eines Bildausschnitts 1 mit vier Pixel um den Faktor 2 in einen Bildausschnitt 2, um den Faktor 3 in einen Bildausschnitt 3 und um den Faktor 4 in einen Bildausschnitt 4.

Die Darstellung zeigt schematisch für den Bildausschnitt mit den vier Pixeln A, B, C, D, daß die Bildvergrößerung um den Faktor 2 durch Einfügung jeweils eines zusätzlichen Pixels zwischen benachbarten Pixeln A, B bzw. C, D in horizontaler Richtung und benachbarten Pixeln A, C bzw. B, D in vertikaler Richtung erfolgt. Bei der Vergrößerung um den Faktor 3 bzw. 4 werden zwischen die benachbarten horizontalen Pixel A, B und c, d und zwischen die vertikal benachbarten Pixel A, C und B, d jeweils zwei bzw. drei neue Pixel X eingesetzt. Da somit für jedes bisherige Pixel (mit Ausnahme des letzten Randpixels der Zeile bzw. Spalte) zwei, drei bzw. vier Pixel zur Verfügung stehen, ergibt sich der Vergrößerungsfaktor um 2, 3 oder 4. In der Darstellung der Figur 1 haben die Randpixel b, c, d naturgemäß ein zu hohes Gewicht, so daß die Bildausschnitte 2, 3, 4 nicht die Vergrößerung der Fläche um 4, 9 oder 16 zeigen. Bei der üblichen Pixelzahl von beispielsweise 768 x 576 ist der durch die Randpixel verursachte Fehler jedoch unmerklich.

Die eingesetzten Pixel X werden in ihrer Intensität nach der Formel

$$X = A*(1-h_x)*(1-v_x) + B*h_x*(1-v_x) + C*(1-h_x)*v_x + D*h_x*v_x$$

berechnet, wobei die Faktoren $h_x$ und $v_x$ zwischen 0 und 1 mit der Schrittweite 1 durch Zoomfaktor variieren.

Für den Bildausschnitt 2 ergibt sich in dieser Formel, daß die Randpixel A, B, C, D unverändert bleiben, daß das einzusetzende Pixel in der ersten Zeile (a + b)/2, das einzusetzende Pixel in der dritten Zeile (c + d)/2 und die Pixel in der neu hinzugekommenen zweiten Zeile die Werte (a + c)/2, (a + b + c + d)/4 und (b + d)/2 aufweisen.

Die Pixelwerte für den Bildausschnitt 3 ändern sich mit den Schrittenweiten 1/3, so daß in der ersten Zeile die hinzukommenden Pixel die Werte (2A + B)/3 und (A + 2B)/3 aufweisen. Die Pixel der übrigen Zeilen ergeben sich nach dem gleichen Schema, so daß das in dem Bildausschnitt 3 eingezeichnete Pixel X sich beispielsweise ergibt zu

In analoger Weise ergeben sich die Werte für den Bildausschnitt 4 unter Verwendung der Faktoren 0, 1/4, 1/2, 3/4, 1.

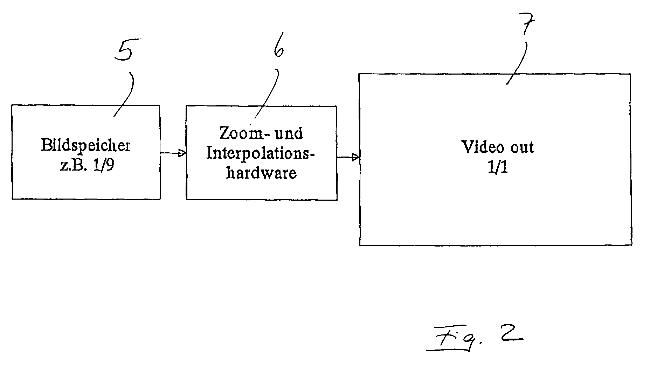

Figur 2 verdeutlicht, daß die in einem Bildspeicher 5 gespeicherten Bilddaten für einen reduzierten Bildausschnitt 1 mit Hilfe einer Hardware-Schaltung 6 (Zoom- und Interpolations-Hardware) in die erfindungsgemäßen Ausgangssignale 7 (Video Out) für die volle Bildgröße des Wiedergabegeräts umgewandelt werden. Diese Umwandlung geschieht durch Hardware in Echtzeit.

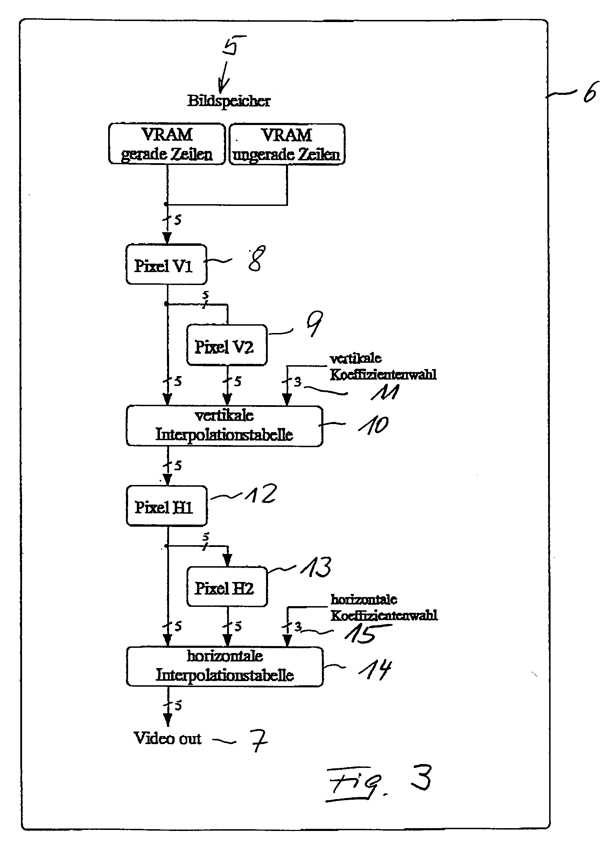

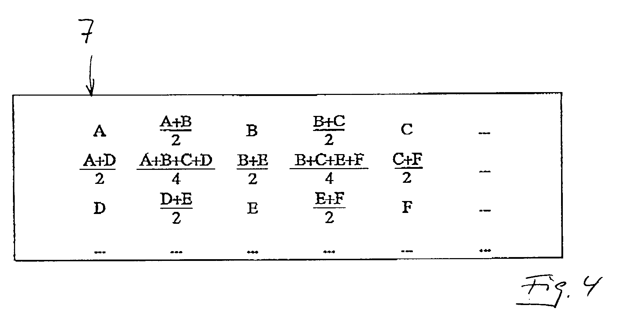

Ein Blockschaltbild für die Hardwareschaltung 6 ist in Figur 3 dargestellt und wird unter Zuhilfenahme der Tabelle der Figur 4 im folgenden erläutert.

Aus dem Bildspeicher 5 werden spaltenweise zueinander gehörende Pixelwerte aus einer geraden Zeile und einer ungeraden Zeile abwechselnd in einen Zwischenspeicher 8 eingelesen, der genau einen Pixelwert V1 zwischenspeichern kann. An den Zwischenspeicher 8 ist ein zweiter Zwischenspeicher 9 angeschlossen, in den Ausgangswerte des ersten Zwischenspeichers 8 als Pixelwert V2 eingeschoben werden. Die Ausgänge der beiden Zwischenspeicher 8, 9 sind mit einer vertikalen Interpolationstabellenschaltung 10 in Hardwareausführung verbunden. Einem dritten Eingang 11 der vertikalen Interpolationstabellenschaltung 10 wird der jeweilige vertikale Koeffizient eingegeben.

Der Ausgang der vertikalen Interpolationstabellenschaltung 10 ist mit einem dritten Zwischenspeicher 12 für einen Pixelwert H1 verbunden, dessen Ausgang einerseits mit einem vierten Zwischenspeicher 13 für einen Pixelwert H2 und andererseits mit einer horizontalen Interpolationstabellenschaltung 14 verbunden ist. Die Verschaltung der dritten und vierten Zwischenspeicher 12, 13 und der horizontale Interpolationstabellenschaltung 13 ist die gleiche wie für die ersten und zweiten Zwischenspeicher 8, 9 und die vertikale Interpolationstabellenschaltung 10. Über einen Eingang 15 wird der gewählte horizontale Koeffizient in die horizontale Interpolationstabellenschaltung 14 eingegeben. Das Ausgangssignal der horizontalen Interpolationstabellenschaltung sind die Pixelsignale 7 (Video Out) für das vergrößerte Videobild.

Figur 4 zeigt eine Tabelle für die Video Out-Signale 7 bei abgespeicherten Pixeln A, B, C, D, E, F ... für den Vergrößerungsfaktor 2. Die Erstellung der Tabellenwerte mit der Schaltung 8 erfolgt dabei wie folgt:

Aus dem Bildspeicher wird das erste Pixel der ersten Zeile (A) als Wert V1 in den ersten Zwischenspeicher 8 eingelesen. V1 wird in den zweiten Zwischenspeicher 9 als V2 weitergeschoben.

Der zum Pixelwert A vertikal zugehörige Pixelwert D der zweiten Zeile wird in den ersten Zwischenspeicher 8 als V1 eingelesen. Mit V1 und V2 wird in der vertikalen Interpolationstabellenschaltung 10 das erste vertikal interpolierte Pixel berechnet (Ergebnis: A). Dieser Wert gelangt in den dritten Zwischenspeicher 12 als H1 und wird in den vierten Zwischenspeicher 13 als H2 weitergeschoben. Nunmehr werden in gleicher Weise nacheinander die nächsten Pixel B und E der ersten und zweiten Zeile als V1 und V2 bereitgestellt und in der vertikalen Interpolationstabellenschaltung 10 vertikal interpoliert (Ergebnis: B). Dieser Wert gelangt als H1 in den dritten Zwischenspeicher 12. Aus H1 und H2 (A und B) wird der erste Wert für Video Out ermittelt (Ergebnis: A) und anschließend gleich der zweite Wert (Ergebnis: A + B/2). Sodann wird H1 als H2 in den vierten Zwischenspeicher 13 geschoben und in den ersten Zwischenspeicher 8 der Pixelwert C eingelesen, der in den zweiten Zwischenspeicher 9 als V2 weitergeschoben wird. Der zugehörige Pixelwert der zweiten Zeile (F) gelangt in V1 und wird nun der vertikalen Interpolation unterworfen (Ergebnis: C). Dieses Ergebnis gelangt als H1 in den dritten Zwischenspeicher 12 und führt zu dem nächsten horizontal interpolierten Wert für das dritte Pixel (Ergebnis: B) und für das vierte Pixel (Ergebnis: B + C/2).

Die Berechnung der nächsten Zeile erfolgt in gleicher Weise, wobei der vertikale Interpolationskoeffizient 1/2 verwendet wird, so daß die Ausgangssignale der vertikalen Interpolationstabellenschaltung 10 (A + D)/2, (B + E)/2 und (C + F)/2 sind und in der horizontalen Interpolationstabelle somit die Werte für das Video Out-Signal 7 in folgender Reihenfolge gebildet werden:

(A + D)/2; (A + B + C + D)/4; (B + E)/2; (B + C + E + F)/4; (C + F)/2.

Somit ergibt sich, daß für die vertikale Interpolationstabelle 10 der verwendete vertikale Koeffizient für jede Zeile konstant ist und 0 oder 1/2 beträgt, während für die horizontale Interpolation der horizontale Koeffizient für jeden Rechenvorgang zwischen 0 und 1/2 alterniert.

Die Taktgeschwindigkeit der Hardwareschaltung 6 muß - wie sich aus den Erläuterungen ergibt - nur um einen geringen Faktor höher sein als die Auslesegeschwindigkeit, so daß die Durchführung der Interpolation und Zurverfügungstellung der ermittelten Pixelwerte für das vergrößerte Bildsignal 7 ohne Probleme in Echtzeit erfolgen kann.

**Patentansprüche**

1. Verfahren zur Wiedergabe von Videobildern, die in Form von digitalisierten Bilddaten einer reduzierten Bildfläche (1) einer Wiedergabeeinrichtung abgespeichert sind, auf einer gegenüber der reduzierten Bildfläche (1) vergrößerten Bildfläche (2, 3, 4) der Wiedergabeeinrichtung, bei dem zwischen zwei vorhandenen benachbarten digitalisierten Pixeldaten (A, B, C, D, E, F) wenigstens ein Pixelwert (X) eingefügt wird, der sich aus einer bilinearen Interpolation in Zeilen- und Spaltenrichtung ergibt, **dadurch gekennzeichnet, daß** zur Durchführung der Interpolationsberechnungen Hardwareschaltungen (10, 14) verwendet werden, in die über jeweils zwei Pixelwerte (V1, V2; H1, H2) und eine Koeffizientenwahl für die Interpolation eingebbar sind, und daß für jede Zeile zunächst eine vertikale Interpolation mit den vorhandenen abgespeicherten Pixelwerten und anschließend mit den so erhaltenen vertikal interpolierten Pixelwerten eine horizontale Interpolation vorgenommen wird.

2. Verfahren nach Anspruch 1, dadurch gekennzeichnet, daß die Interpolation von einer Bildecke ausgehend durch Einlesen der vorhandenen Pixeldaten zeilenweise erfolgt, wobei zu jedem Zeilenpixel das in Einleserichtung benachbarte Spaltenpixel eingelesen und einer Interpolationsberechnung zu einem ersten vertikalen Interpolationsergebnis unterzogen wird, bevor das nächste Zeilenpixel eingelesen und mit dem in Einleserichtung benachbarten Spaltenpixel derselben Interpolationsberechnung zu einem zweiten vertikalen Interpolationsergebnis unterzogen wird, und wobei die vertikalen Interpolationsergebnisse einer horizontalen Interpolationsberechnung zur Bildung des wiederzugebenden Videosignals (7) unterworfen werden.

3. Verfahren nach einem der Ansprüche 1 und 2 zur Wiedergabe von Videobildern, die in Form von digitalisierten Bilddaten einer reduzierten Bildfläche (1) einer Wiedergabeeinrichtung abgespeichert sind, auf einer gegenüber der reduzierten Bildfläche (1) vergrößerten Bildfläche (2, 3, 4) der Wiedergabeeinrichtung, bei dem zwischen zwei vorhandenen benachbarten digitalisierten Pixeldaten (A, B, C, D, E, F) wenigstens ein Pixelwert (X) eingefügt wird, der sich aus einer bilinearen Interpolation in Zeilen- und Spaltenrichtung ergibt, dadurch gekennzeichnet, daß zur Durchführung der Interpolationsberechnungen Hardwareschaltungen (10, 14) verwendet werden, in die über jeweils zwei Pixelwerte (V1, V2; H1, H2) und eine Koeffizientenwahl für die Interpolation eingebbar sind, und daß für jede Spalte zunächst eine horizontale Interpolation mit den vorhandenen abgespeicherten Pixelwerten und anschließend mit den so erhaltenen horizontal interpolierten Pixelwerten eine vertikale Interpolation vorgenommen wird.

4. Verfahren nach Anspruch 3, dadurch gekennzeichnet, daß die Interpolation von einer Bildecke ausgehend durch Einlesen der vorhandenen Pixeldaten spaltenweise erfolgt, wobei zu jedem Spaltenpixel das in Einleserichtung benachbarte Zeilenpixel eingelesen und einer Interpolationsberechnung zu einem ersten horizontalen Interpolationsergebnis unterzogen wird, bevor das nächste Spaltenpixel eingelesen und mit dem in Einleserichtung benachbarten Zeilenpixel derselben Interpolationsberechnung zu einem zweiten horizontalen Interpolationsergebnis unterzogen wird, und wobei die horizontalen Interpolationsergebnisse einer vertikalen Interpolationsberechnung zur Bildung des wiederzugebenden Videosignals (7) unterworfen werden.

$$X = A*(1-h_x)*(1-v_x) + B*h_x*(1-v_x) + C*(1-h_x)*v_x + D*h_x*v_x$$

$$h := 0 \ldots 1 \quad v := 0 \ldots 1 \quad \text{Schrittweite} = \frac{1}{\text{Zoomfaktor}}$$

Fig. 1

*5*

*6*

*7*

| Bildspeicher z.B. 1/9 | → | Zoom- und Interpolations- hardware | → | Video out 1/1 |

Fig. 2

Fig. 3

7

| | | | | | |
|---|---|---|---|---|---|
| A | $\dfrac{A+B}{2}$ | B | $\dfrac{B+C}{2}$ | C | --- |
| $\dfrac{A+D}{2}$ | $\dfrac{A+B+C+D}{4}$ | $\dfrac{B+E}{2}$ | $\dfrac{B+C+E+F}{4}$ | $\dfrac{C+F}{2}$ | --- |
| D | $\dfrac{D+E}{2}$ | E | $\dfrac{E+F}{2}$ | F | --- |
| --- | --- | --- | --- | --- | --- |

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X<br>A | DE-A-35 18 281 (ELSCINT LTD.)<br><br>* Seite 6, Zeile 10 - Zeile 25 *<br>* Seite 8, Zeile 20 - Seite 11, Zeile 29 *<br>--- | 1<br>2-4 | H04N5/262<br>G06F15/62 |
| A | EP-A-0 375 057 (PHILIPS ELECTRONIC AND ASSOCIATED INDUSTRIES LIMITED)<br>* Spalte 8, Zeile 1 - Spalte 12, Zeile 4 *<br>--- | 1-4 | |
| A | US-A-4 894 715 (UCHIKUBO ET AL.)<br>* Spalte 5, Zeile 4 - Spalte 8, Zeile 5 *<br>--- | 1-4 | |
| P,A | US-A-5 253 064 (YAMAMOTO ET AL.)<br>* Spalte 7, Zeile 40 - Spalte 9, Zeile 29 *<br><br>* Abbildungen 6A,6B *<br>& JP-A-4 010 783 (HITACHI LTD)<br>--- | 1-4 | |
| X | PATENT ABSTRACTS OF JAPAN<br>vol. 14, no. 41 (E-879) 25. Januar 1990<br>& JP-A-01 272 381 (FUJITSU LTD) 31. Oktober 1989<br>* Zusammenfassung *<br>--- | 1 | |
| A | EP-A-0 079 542 (GENERAL ELECTRIC COMPANY)<br>* Seite 3, Zeile 1 - Seite 5, Zeile 11 *<br>--- | 1-4 | RECHERCHIERTE SACHGEBIETE (Int.Cl.5)<br><br>H04N<br>G06F<br>G09G |
| A | EP-A-0 359 292 (DAINIPPON SCREEN MFG. CO., LTD.)<br>* Seite 18, Zeile 43 - Seite 23, Zeile 46; Abbildungen 16-19 *<br>----- | 1-4 | |

Der vorliegende Recherchenbericht wurde für alle Patentansprüche erstellt

| Recherchenort | Abschlußdatum der Recherche | Prüfer |
|---|---|---|
| DEN HAAG | 1. Juli 1994 | Wentzel, J |

EPO FORM 1503 03.82 (P04C03)